# EUROPÄISCHE PATENTSCHRIFT

(11) **EP 0 825 209 B1**
(45) Veröffentlichungstag und Bekanntmachung des Hinweises auf die Patenterteilung: **05.11.2003**
(21) Anmeldenummer: 97113456.4
(22) Anmeldetag: 05.08.1997
(51) Int. Cl.: C08G 18/10, C08G 18/75

(54) **Verwendung reaktionsfähiger Massen mit langer Topfzeit**
Use of reactive compositions with extended pot-life
Utilisation de compositions réactives ayant une vie en pot prolongée

(30) Priorität: 16.08.1996 DE 19632925
(43) Veröffentlichungstag der Anmeldung: 25.02.1998
(73) Patentinhaber: BAYER AG, 51368 Leverkusen (DE)
(72) Erfinder: Groth, Stefan, Dr., 51373 Leverkusen (DE); Pedain, Josef, Dr., 51061 Köln (DE); Schmalstieg, Lutz, Dr., 50676 Köln (DE); Schütze, Detlef-Ingo, Dr., 51061 Köln (DE)

(56) Entgegenhaltungen:
- EP-A- 0 197 806
- EP-A- 0 417 553
- FR-A- 1 534 536

## Beschreibung

Die Erfindung betrifft die Verwendung reaktionsfähiger Massen auf Basis von NCO-Präpolymeren und Polyol-Kettenverlängerer mit langer Topfzeit bei Raumtemperatur und hoher Reaktivität bei erhöhter Temperatur zur Beschichtung von Substraten jeglicher Art, vornehmlich von flexiblen Substraten wie Textilien und Leder.

Lösungsmittelfreie bzw. -arme reaktionsfähige Massen auf Basis von NCO-Präpolymeren sind bekannt. Hierbei wird ein Ketoxim-blockiertes NCO-Präpolymerisat auf Basis von aromatischem Polyisocyanat mit Polyamin als Kettenverlängerer gemischt und anschließend durch eine Hitzebehandlung unter Abspaltung des Ketoxims und gegebenenfalls Verdampfen des Lösungsmittels ausgehärtet. Reaktionsfähige Massen dieser Art für die Beschichtung flexibler Substrate werden z.B. in der DE-A 29 02 090 beschrieben.

Auch reaktionsfähige Massen auf Basis Ketoxim-blockierter Präpolymerisate aus aliphatischen Polyisocyanaten sind bekannt (EP-A 0 065 688). Sie erfordern jedoch deutlich längere Härtungszeiten als die Systeme auf Basis aromatischer Polyisocyanate, weswegen Reaktivsysteme auf Basis aliphatischer Polyisocyanate bisher keine breite technische Verwendung gefunden haben.

Bei der Härtung der beiden beschriebenen Systeme erfolgt also eine Abspaltung des Ketoxims, die selbst dann eine Abluftbehandlung notwendig macht, auch wenn die Systeme keine Lösungsmittel enthalten. Außerdem führte die Blockierung freier NCO-Gruppen zu zusätzlichen Urethangruppen und damit zu einem Viskositätsanstieg der Massen, der in den meisten Fällen durch Zusatz von Lösungsmittel kompensiert werden muss.

Aus der FR-A 1 534 536 ist das Herstellungsverfahren eines Polyurethan-Polyester-Elastomers bekannt, das durch Reaktion von Diolen wie 1,4-Bis-(2-hydroxyethoxy)benzol, von Polyisocyanaten wie 4,4'-Diisocyanato-dicyclohexylmethan und von Hydroxygruppen aufweisenden Copolyestern auf Basis von Ethylenglycol, Neopentylglycol und Adipinsäure erhalten wird.

Die EP-A 0417 553 lehrt die Herstellung von Polyurethanelastomeren, die durch Verwendung von organischen Polyisocyanaten wie Bis-(4-isocyanato-cyclohexyl)-methan, Polyesterderivaten einer Dicarbonsäure mit wenigstens 14 C-Atomen und nichtphenolischen Kettenverlängerungsmitteln wie Hydrochinon-bis-(2-hydroxyethyl)-ether erfolgt.

EP-A 0 197 806 beschreibt Polyurethane, die zur Verklebung von Glas oder Kunststoff dienen und aus mindestens einem aliphatischen oder cycloaliphatischen Diisocyanat wie Bis-(4-isocyanatocyclohexyl)-methan, mindestens einem Polyol wie z.B. Polyoxypropylenglycol oder Poly-(1,4-oxybutylen)glycol, und mindestens einem bifunktionellen aromatischen Kettenverlängerer wie Hydrochinon-bis-(2-hydroxyethyl)ether bestehen.

Der Stand der Technik lehrt jedoch nicht die Verwendung derartiger Massen zur Beschichtung von flexiblen Substraten wie Textilien und Leder.

Aufgabe der vorliegenden Erfindung war es, reaktionsfähige Massen zur Beschichtung von flexiblen Substraten wie Textilien und Leder auf Basis von NCO-Präpolymeren bereitzustellen, die die Nachteile des Standes der Technik überwinden.

Überraschenderweise wurde nun gefunden, dass sich diese Aufgabe durch Auswahl bestimmter Polyole als Kettenverlängerer lösen lässt.

Gegenstand der Erfindung ist daher die Verwendung bestimmter reaktionsfähiger Massen mit einem Gehalt an inertem organischem Lösungsmittel von bis zu 20, vorzugsweise bis zu 15 Gew.-%, bezogen auf A, enthaltend
A. NCO-Präpolymer mit einem NCO-Gehalt von 1 bis 8, vorzugsweise 2 bis 4 Gew.-% auf Basis von aliphatischen Polyisocyanat und mit einem Gehalt an monomerem Polyisocyanat unter 2, vorzugsweise unter 0,5 Gew.-%, jeweils bezogen auf A, und
B. Amin-freien Kettenverlängerer,
wobei das Äquivalentverhältnis der freien NCO-Gruppen aus A zu den NCO-reaktiven Gruppen von B 0,90 bis 1,35, vorzugsweise 1 bis 1,25 beträgt,
dadurch gekennzeichnet, dass der Kettenverlängerer B zu mindestens 50, vorzugsweise mindestens 80 Äquivalent-%, bezogen auf die NCO-reaktiven Gruppen des Kettenverlängerers, aus Verbindungen der Formel

HO-X-Y-X-OH (I)

besteht, worin
- Y: Methylen, Ethylen, -C≡C-, Cyclohexylen,-1,4, -1,3, -1,2, Phenylen-1,4, -1,3, -1,2 und
- X: Methylen, OCH₂CH₂ (wobei der Sauerstoff an das Y gebunden ist), Cyclohexylen-1,4, -1,3, -1,2
bedeuten mit der Maßgabe, dass die Verbindungen I zwischen 50 und 160°C schmelzen
zu Beschichtung von flexiblen Substraten wie Textilien und Leder .

Die bevorzugteste Verbindung I ist 1,4-Bis-(2-hydroxyethoxy)benzol.

Im nachfolgenden werden unter "mittleren Molekulargewichten" jeweils als Zahlenmittel bestimmten Molekulargewichte verstanden.

Die Verwendung von 1,4-Bis(2-hydroxyethoxy)benzol als Baustein für Polyurethane ist seit langem bekannt (I.S. Lin., J. Biranowski, D.H. Lorenz, Adv. Urethan Sci. Technol. 1981, 8, 105-117; B.L. Williams, L. Weissbein, A. Singh, Rubber Age 1968, 57-65; S.A. Iobst, H.W. Cox, J. Appl. Polym. Sci. 1979, 23, 2513-2527).

Auch als Kettenverlängerer für die Umsetzung mit NCO-Präpolymeren wurden in einzelnen Fällen schon Verbindung I empfohlen; vgl. US-A 4 119 594. Diese Literaturstelle betrifft jedoch Reaktivsysteme mit Präpolymeren auf Basis aromatischer Polyisocyanate, so dass diese Literaturstelle zur Lösung der hier gestellten Aufgabe nichts beitragen konnte.

Unsere Untersuchungen haben ergeben, dass der erfindungsgemäße Erfolg durch eine Heterogenität von Verbindung I mit den restlichen Komponenten der reaktionsfähigen Masse (also insbesondere der Komponente A und gegebenenfalls dem Anteil der Komponente B, der mit Verbindung I nicht identisch ist) begünstigt werden kann. Besonders günstige Ergebnisse erzielt man, wenn Verbindung I bei Mischbedingungen (d.h. Temperaturen bis zu 50°C) als Feststoff vorliegt. In dieser Hinsicht unterscheidet sich unsere Erfindung vom Verfahren der US-A 4 086 214, wonach eine Heterogenität von Kettenverlängerer und höhermolekularem Polyol durch Vorreaktion mit einem Teil des Isocyanats gerade vermieden werden soll.

Die Reaktionsmischung gilt als heterogen, wenn die Verbindung I zu mehr als 50 % in Form von Teilchen vorliegt, die eine mittlere Teilchengröße von mehr als 1 µm aufweisen. Die mittlere Teilchengröße ist die Teilchengröße, oberhalb und unterhalb der jeweils 50 Gew.-% der Teilchen liegen.

Bevorzugte NCO-Präpolymere A besitzen als Zahlenmittel bestimmte Molekulargewichte von 500 bis 10 000, vorzugsweise von 700 bis 8 000.

Die NCO-Präpolymeren A können durch Umsetzung von organischen Polyisocyanaten a) mit NCO-reaktiven Verbindungen b) hergestellt werden.

Als organische Polyisocyanate a) kommen aliphatische und cycloaliphatische Polyisocyanate in Betracht.

Bevorzugte Polyisocyanate a) sind Verbindungen der Formel Q(NCO)ₙ mit einem mittleren Molekulargewicht unter 800, worin n eine Zahl von 2 bis 4 und Q einen aliphatischen C₄-C₁₂-Kohlenwasserstoffrest oder einen cycloaliphatischen C₆-C₁₅-Kohlenwasserstoffrest bedeuten, beispielsweise Diisocyanate aus der Reihe 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (IMCI), 1,3-Diisocyanato-4-methyl-cyclohexan, 1,3-Diisocyanato-2-methyl-cyclohexan und α,α,α',α'-Tetramethyl-m- oder -pxylylen-diisocyanat (TMXDI) sowie aus diesen Verbindungen bestehende Gemische. Bevorzugt ist die Verwendung von 4,4'-Diisocyanatodicyclohexylmethan, insbesondere von technischem 4,4'-Diisocyanatodicyclohexylmethan mit 10 bis 50, vorzugsweise 15 bis 25 Gew.-% trans/trans-4,4'-Diisocyanatodicyclohexylmethan.
Für spezielle Anwendungen können in Mengen bis zu 10 Äquivalent-%, bezogen auf die NCO-Gruppen der gesamten Polyisocyanate a), andere Polyisocyanate, wie sie z.B. in "Methoden der organischen Chemie" (Houben-Weyl), Bd. 14/2, Georg Thieme-Verlag, Stuttgart 1963, Seiten 61 bis 70 und von W. Siefken in Liebigs Annalen der Chemie 562, Seiten 75 bis 136 beschrieben sind, mitverwendet werden. Besonders bevorzugt ist jedoch die alleinige Verwendung von aliphatischen und/oder cycloaliphatischen Diisocyanat, insbesondere von 4,4'-Diisocyanato-dicyclohexylmethan als einzigen Polyisocyanat.

Bevorzugte NCO-reaktive Verbindungen b) sind vor allem Polyole. Als Polyole können höhermolekulare und in untergeordneter Menge auch niedermolekulare Hydroxylverbindungen eingesetzt werden.

Höhermolekulare Hydroxylverbindungen umfassen die in der Polyurethan-Chemie üblichen Hydroxypolyester, Hydroxypolyether, Hydroxypolythioether, Hydroxypolyacetale, Hydroxypolycarbonate, Dimerfettalkohole und/oder Esteramide, jeweils mit mittleren Molekulargewichten von 400 bis 8 000, bevorzugt solche mit mittleren Molekulargewichten von 500 bis 6 500. Hydroxypolyether, Hydroxypolyester und Hydroxypolycarbonate sind besonders bevorzugt

Als niedermolekulare Polyhydroxylverbindungen können in der Polyurethan-Chemie übliche Polyole, mit Molekulargewichten von 62 bis 399, wie Ethylenglykol, Triethylenglykol, Tetraethylenglykol, Propandiol-1,2 und -1,3, Butandiol-1,4- und -1,3, Hexandiol-1,6, Octandiol-1,8,Neopentylglykol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, Bisphenol A, Tetrabrombisphenol A, Glycerin, Trimethylolpropan, Hexantriol-1,2,6-Butantriol-1,2,4, Pentaerythrit, Chinit, Mannit, Sorbit, Methylglykosid und 4,3,6-Dianhydrohexite verwendet werden.

Als Polyetherpolyole geeignet sind die in Polyurethan-Chemie üblichen Polyether, wie z.B. die unter Verwendung von zwei- bis sechswertigen Startermolekülen wie Wasser oder den oben genannten Polyolen oder 1- bis 4-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids. Besonders bevorzugt sind im Durchschnitt 2 bis 4 Hydroxylgruppen aufweisende Propylenoxidpolyether, die bis zu 50 Gew.-% eingebaute Polyethylenoxid-Einheiten enthalten können.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrbasischen, vorzugsweise zweibasischen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer aromatischer und/oder heterocyclischer Natur sein und gegebenenfalls z.B. durch Halogenatome substituiert und/oder ungesättigt sein. Beispiele hierfür sind:

Adipinsäure, Phthalsäure, Isophthalsäure, Bernsteinsäure, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen die oben genannten Polyole in Frage.

Erfindungsgemäß bevorzugt sind unterhalb 60°C schmelzende Hydroxypolyester mit 2 oder 3 endständigen OH-Gruppen.

Bevorzugt wird die Komponente A mit NCO-reaktiven Verbindungen (b) aufgebaut, bei denen es sich um 2 bis 3 Hydroxylgruppen aufweisende Polypropylenoxid- und/oder Polyethylenoxid-polyether mit einem mittleren Molekulargewicht von 500 bis 8 000 und/oder 2 bis 3 Hydroxylgruppen aufweisende Adipinsäurepolyester mit einem mittleren Molekulargewicht von 1 000 bis 6 000 handelt.

Die in Frage kommenden Polycarbonatpolyole sind durch Reaktion von Kohlensäurederivaten, z.B. Diphenylcarbonat oder Phosgen, mit Diolen erhältlich. Als derartige Diole kommen z.B. Ethylenglykol, Triethylenglykol, Tetraethylenglykol, Propandiol-1,2 und -1,3,Butandiol-1,4 und -1,3, Pentandiol-1,5, Hexandiol-1,6, Octandiol-1,8, Neopentylgkylol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Vorzugweise erhält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-A 1 770 245, oder durch Veretherung von Hexandiol mit sich selbst zum di- oder Trihexylenglykol erhalten wurden. Die Herstellung solcher Derivate ist z.B. aus DE-A 1 570 540 bekannt. Auch die in der DE-A 3 717 060 beschriebenen Polyether-Polycarbonatdiole können sehr gut eingesetzt werden.

Die Hydroxypolycarbonate sollen im wesentlichen linear sein. Sie können aber auch gegebenenfalls durch den Einbau polyfunktioneller Komponenten, insbesondere niedermolekularer Polyole, leicht verzweigt werden. Hierzu eignen sich beispielsweise Trimethylolpropan, Hexantriol-1,2,6, Glycerin, Butantriol-1,2,4, Pentaerythrit, Chinit, Mannit, Sorbit, Methylglykosid und 4,3,6-Dianhydrohexite.

Die Herstellung der Komponente A kann auf an sich bekannte Weise erfolgen, indem man die genannten Polyhydroxylverbindungen mit überschüssigem Diisocyanat, vorzugsweise bei 70 bis 120°C umsetzt. Man wählt ein NCO/OH-Verhältnis von 1,5:1 bis 20:1, vorzugsweise 1,7:1 bis 15:1 und trennt gegebenenfalls überschüssiges Monomer vom Präpolymer durch bekannte technische Verfahren wie z.B. Dünnschichtdestillation oder Extraktion ab, so dass ein Polyisocyanat-Restmonomerengehalt von weniger 2 Gew.-%, vorzugsweise weniger als 0,5 Gew.-% resultiert. Besonders bevorzugt ist ein NCO/OH-Verhältnis von 4:1 bis 15:1 und die anschließende Abtrennung des Monomeren durch Dünnschichtdestillation bis auf einen Restmonomerengehalt unter 0,5 Gew.-%. Bei den so hergestellten NCO-Präpolymeren wurde im Rahmen der vorliegenden Erfindung die Beobachtung gemacht, dass sie ein besonders optimales Verhältnis von langer Verarbeitungszeit einerseits und schneller Aushärtung andererseits zeigen.

Die Komponente A kann zwecks Einstellung der optimalen Verarbeitungsviskosität von 20 000 bis 40 000 mPas bei 20°C mit bis zu 20 Gew.-%, vorzugsweise bis 15 Gew.-%, bezogen auf das NCO-Präpolymerisat, an organischen Lösungsmitteln gemischt werden. Besonders bevorzugt ist die Iösungsmittelfreie Variante.

Bevorzugte Kettenverlängerer B, insbesondere bevorzugte Verbindungen I sind Verbindungen, die sich auch in Präpolymer A unter 50°C nicht lösen. Besonders bevorzugte Verbindungen I umfassen beispielsweise 1,2-Bis(2-hydroxyethoxy)benzol, 1-3-Bis(2-hydroxyethoxy)benzol, trans-1,4-Bishydroxymethylcyclohexan, 1,2-Bis(4-hydroxycyclohexyl)ethan, Bis(4-hydroxycyclohexyl)methan, 2-Butin-1,4-diol.

Die bevorzugteste Verbindung I ist 1,4-Bis-(2-hydroxyethoxy)-benzol.
Die Komponente B kann als solche direkt mit dem Präpolymer gemischt werden. Es hat sich aber zwecks besserer Dosierbarkeit als günstig erwiesen, die normalerweise festen Verbindungen I in einer flüssigen Komponente anzurühren. Solche Mischungen bestehen dann vorzugsweise aus 20 bis 90, insbesondere 40 bis 70 Gew.-% Verbindungen I und 10 bis 80, insbesondere 30 bis 60 Gew.-% flüssige Komponente. Die flüssige Komponente kann eines der oben beschriebenen höhermolekularen Polyole und/oder ein nicht mit Isocyanaten reagierender Weichmacher und/oder ein Lösungsmittel bzw. Ricinusöl sein. Bevorzugt als Anpastungsmittel sind 2 oder 3 OH-Gruppen tragende Polyole wie sie oben beschrieben wurden.

Zur Anpassung der erfindungsgemäß zu verwendenden Reaktivmassen an die Parameter der maschinellen Verarbeitung kann es sich empfehlen, für die Reaktion zwischen Komponente A und B einen Katalysator einzusetzen, der sowohl in den Komponente A oder B enthalten sein als auch der fertigen Mischung zugesetzt werden kann. Hierfür kommen alle für die NCO/OH-Addition bekannten Katalysatoren in Frage, wie sie z.B. im Kunststoffhandbuch (Hrsg. Becker/Braun), 2. Aufl., Bd. 7, Polyurethane, S. 92 ff, Carl Hanser-Verlag, München Wien 1983, beschrieben sind. Solche Katalysatoren umfassen beispielsweise Amine wie 1,4-Diazabicyclo[2.2.2]octan (DABCO), 1-Azabicyclo[2,2,2]octan (Chinuclidin), 1,8-Diazabicyclo[5.4.0]undecen-7 (DBU), 1,5-Diazabicyclo[4.3.0]nonen-5 (DBN), Dimethylbenzylamin, Triethylamin, N-Methylmorpholin, N,N-Dimethylpiperazin.

Bevorzugt sind organische Metallkatalysatoren wie organische Titan-, Zink-, Wismutoder Zinnverbindungen, vorzugsweise -oxide, -hydroxide und -salze von C₁-C₂₄-Monocarbonsäuren sowie Di-C₁-C₁₂-alkyl-zinn-C₁-C₁₈-mono- oder dicarboxylate, wie Tetraisopropyltitanat, Dibutylzinn-IV-oxid, Zinn-II-octoat, Zinn-II-stearat, Dibutylzinn-IVdilaurat, Dibutylzinn-IV-diacetat, Dimethylzinn-IV-dilaurat, Dioctylzinn-IV-dilaurat, Dioctylzinn-IV-bis(isooctylmercaptoacetat), Dibutylzinn-IV-bis(isooctylmercaptoacetat), Dimethylzinn-IV-bis(isooctylmercaptoacetat), Dibutylzinn-IV-bis(thiododecylat), Dimethylzinn-IV-bis(thiododecylat), Dioctylzinn-IV-bis(thiododecylat), Dibutylzinn-IV-dithioglykolat, Dibutylzinn-IV-maleat und Dimethylzinn-IV-maleat sowie Mischungen dieser genannten Katalysatoren untereinander und mit oben genannten Aminen.

Ganz besonders geeignet im Sinne der Erfindung sind Dioctylzinn-IV-bis(isooctylmercaptoacetat), Dibutylzinn-IV-bis(isooctylmercaptoacetat) und Dimethylzinn-IV-bis(isooctylmercaptoacetat) sowie latente Katalysatoren aus Zinn- oder Wismutverbindungen und Mercaptoverbindungen, wie sie z.B. in der US-A 4 788 083 (= DE-A 37 09 631) beschrieben sind.

Die US-A 4 788 083 betrifft einen aktivierbaren Katalysator, der durch einen Amin-Aktivator oder durch Erhitzen aktivierbar ist, der ein Reaktionsprodukt von
(a) einem Metallkatalysator, nämlich einem Zinnkatalysator, einem Wismut-Katalysator oder einem Gemisch davon, mit
(b) einem molaren Überschuß eines der Komplexierungsmittel
   (1) eine Mercaptoverbindung
   (2) ein mit einer Isocyanatgruppe in Gegenwart eines tertiären Amins als Aktivator reaktionsfähiges Polyphenol, und
   (3) Gemische davon
   ist.

Bevorzugte Metallkatalysatoren (a) umfassen Zinnverbindungen aus der Reihe Zinn(IV)-oxid, Zinn(II)-octoat, Dibutylzinndioctoat, ein Zinnmercaptid (z.B. Dibutylzinndilaurylmercaptid), Zinn(II)-citrat, Zinn(II)-acetat, Zinn(II)-oxalat, Zinn(II)-chlorid, Zinn(IV)-chlorid, Tetraphenylzinn, Tetrabutylzinn, Tri-n-butylzinnacetat, ein Dialkylzinndicarboxylat (z.B. Dibutylzinndilaurat, Dibutylzinndioctoat, Dioctylzinndioctoat), Dimethylzinndichlorid oder Gemische davon und Wismutverbindungen aus der Reihe Wismuttricarboxylat, Wismutnitrat, Wismuthalogenid, Wismutsulfid, basisches Wismutdicarboxylat oder Gemische davon.

Bevorzugte Mercaptoverbindungen (b/1) umfassen beispielsweise Trimethylolpropantri-(3-mercaptopropionat), Pentaerythrit-tetra-(3-mercaptopropionat), Glykol-di-(3-mercaptopropionat), Glykol-dimercaptoacetat, Trimethylolpropan-trithioglykolat, Mercaptodiethylether, Ethandithiol, Thiomilchsäure, Mercaptopropionsäure oder Ester davon, Thiophenol, Thioessigsäure, 2-Mercaptoethanol, 1,4-Butandithiol, 2,3-Dimercaptopropanol, Toluol-3,4-dithiol, α,α'-Dimercapto-p-xylol, Thiosalicylsäure, Mercaptoessigsäure und deren Ester, Dodecandithiol, Didodecandithiol, Dithiophenol, Di-p-chlorthiophenol, Dimercaptobenzothiazol, 3,4-Dimercaptotoluol, Allylmercaptan, Benzylmercaptan, 1,6-Hexandithiol, 1-Octanthiol, p-Thiokresol, 2,3,5,6-Tetrafluorthiophenol, Cyclohexylmercaptan, Methylthioglykolat, ein Mercaptopyridin, Dithioerythrit, 6-Ethoxy-2-mercaptobenzothiazol, d-Limonen-dimercaptan oder Gemische davon.

Bevorzugte Polyphenole (b/2) umfassen beispielsweise Brenzkatechin, Pyrogallol, 3-Methoxybrenzkatechin oder Gemische davon.

Das Molverhältnis von Mercaptogruppen der Mercaptoverbindungen (b/1) oder von phenolischen Hydroxylgruppen des Polyphenols zum Metallgehalt des Metallkatalysators (a) liegt in der Regel im Bereich von 2:1 bis 500:1.

Als Amin-Aktivatoren kommen vor allem tertiäre Amine in Frage, wie z.B. Triethylamin, Dimethylethylamin, Tetramethylethylendiamin, Trimethylamin, Tributylamin, Dimethylbenzylamin, Dimethylcyclohexylamin, Dimethylethanolamin, Diethylethanolamin, Triethanolamin, Pyridin, 4-Phenylpropylpyridin, 2,4,6-Collidin, Chinolin, Tripropylamin, Isochinolin, N-Ethylmorpholin, Triethylendiamin oder ein Gemisch davon.

Die erfindungsgemäße Einsatzmenge des Katalysators bzw. des Katalysatorsystems beträgt 0,01 bis 3, bevorzugt 0,1 bis 1,0 Gew.-%, bezogen auf das Gesamtgewicht der Komponente A + Komponente B.

Die Vermischung des NCO-Präpolymerisats A mit der Kettenverlängererkomponente B erfolgt im allgemeinen etwa im Verhältnis der Äquivalentgewichte dieser Komponenten, obwohl für einige Anwendungszwecke auch eine Untervernetzung zweckmäßig ist, so dass das Äquivalentverhältnis von NCO zu OH erfindungsgemäß im allgemeinen 0,90 bis 1,35, bevorzugt 1,0 bis 1,25 beträgt.

Zur Herstellung der gebrauchtsfertigen Reaktivmassen können Zuschläge wie z.B. Pigmente, UV-Stabilisatoren, Verlaufmittel, Antioxidantien, Füllstoffe oder Treibmittel beigemischt werden.

Die erfindungsgemäß zu verwendenden reaktionsfähigen Massen besitzen eine sog. Topfzeit von mindestens 4, vorzugsweise mindestens 8 Stunden. Unter "Topfzeit" versteht man die Zeitdauer vom Zumischen des Kettenverlängerers B bis zur Verdoppelung der Viskosität, gemessen in mPa.s bei 23°C. Die erfindungsgemäß zu verwendenden Massen bleiben also nach Zumischen des Kettenverlängerers B über die Dauer eines Arbeitstages verarbeitbar.

Die erfindungsgemäß zu verwendenden reaktionsfähigen Massen können auf jede erdenkliche Art verarbeitet werden, z.B. durch Gießen, Pressen, vorzugsweise aber durch Strechen auf ein Substrat in dünnen Schichten nach dem Direktbeschichtungsverfahren - auf Textil und Leder vorzugsweise nach dem Umkehrbeschichtungsverfahren.

Die Aushärtungszeit beträgt 2 bis 18, vorzugsweise 6 bis 12 Minuten. Unter Aushärtungszeit wird die Zeit verstanden, die eine 100 µm dicke Schicht der Reaktivmasse einer stufenweisen Hitzebehandlung von 80, 120 und 160°C von jeweils einem Drittel der Gesamtzeit ausgesetzt werden muss, um einen zusammenhängenden Polymerfilm mit einem nahezu konstantem 100 %-Modul (nach DIN 53 504) zu ergeben; "nahezu konstant" in diesem Zusammenhang bedeutet, dass sich der 100 %-Modul eines Polymerfilms, der unmittelbar anschließend an die Aushärtungszeit bei 160°C für ein weiteres Drittel der gesamten Aushärtungszeit bei 160°C weitererhitzt wird, von dem des wie zuvor beschrieben erzeugten Polymerfilms um nicht mehr als 5 % unterscheidet.

Die kurze Aushärtungszeit ermöglicht es, mit hoher Geschwindigkeit zu beschichten. Natürlich ist es möglich, durch einen jeweiligen spezifischen chemischen Aufbau des NCO-Präpolymerisates Schichten mit unterschiedlichen Eigenschaften, wie z.B. eine Haft-, Schaum-, Zwischen- oder Deckschicht, zu erzeugen. Ein besonderer Vorteil ist, dass die Beschichtungen aufgrund ihres Schmelzverhaltens unterhalb von 200°C sowohl thermisch als auch mittels Hochfrequenz verschweißbar sind.

Die Herstellung einer Umkehrbeschichtung kann beispielsweise folgendermaßen erfolgen: Man trägt zuerst auf einen geeigneten Zwischenträger, z.B. ein Trennpapier, die Reaktivmasse für den Deckstrich in einer Menge von ca. 30 bis 100 g/m² auf, härtet im Trockenkanal aus, bringt auf den trockenen Deckstrich die Reaktivmasse für den Haftstrich ebenfalls in einer Menge von ca. 30 bis 100 g/m³, kaschiert das Substrat hinzu, härtet die Beschichtung in einem weiteren Trockenkanal bei ca. 120 bis 190°C, vorzugsweise 140 bis 170°C, aus und zieht das beschichtete Substrat vom Trennträger ab. Selbstverständlich ist es auch möglich, nur den Deck-, Zwischen- oder Haftstrich nach diesem Beschichtungsverfahren zu erzeugen und für den anderen Strich andere Beschichtungssysteme des Standes der Technik einzusetzen.

Wie schon erwähnt, können die Reaktivmassen aber auch im Direktstreichverfahren unmittelbar auf das textile Substrat aufgebracht werden. Hierbei ist der abspalterfreie und lösungsmittelfreie bzw. -arme Charakter der erfindungsgemäß zu verwendenden Reaktivmassen von großem Vorteil bei der Herstellung von dicken Planenbeschichtungen. Mit Auftragsmengen von 100 bis 200 g/m² können auf diese Weise ca. 0,4 mm dicke, technische Beschichtungen in nur einem Arbeitsgang erstellt werden.

Sollen mit den erfindungsgemäß zu verwendenden Reaktivmassen Schaumschichten hergestellt werden, dann setzt man ihnen Treibmittel sowie zweckmäßigerweise auch Schaumstabilisatoren zu. Geeignete Zusätze werden z.B. in der DE-A 1 794 006 (GB-B 1 211 339) sowie in der US-A 3 262 805 beschrieben.

### Beispiele

### Vorpolymerisat A1

2004 g eines Hydroxylpolyethers auf Basis von Trimethylolpropan, Propylenoxid und Ethylenoxid mit einem Molekulargewicht von 6 000 und 126 g eines Hydroxypolyethers auf Basis von Bisphenol A und Propylenoxid mit einem Molekulargewicht von 560 sowie 9 g Trimethylolpropan werden mit 2 162 g DESMODUR® W (4,4'-Diisocyanatodicyclohexylmethan, Handelsprodukt der BAYER AG) bei 100 bis 110°C umgesetzt, bis der berechnete NCO-Gehalt von 14,5 Gew.-% erreicht ist. Es werden 4 g Dibutylphosphat zugesetzt, und das überschüssige 4,4'-Diisocyanatodicyclohexylmethan wird mittels Dünnschichtverdampfung bei 150 bis 180°C und einem Druck von 0,1 mbar entfernt. Das Vorpolymerisat hat eine Viskosität von 20 000 mPas bei 23°C, einen bestimmten NCO-Gehalt von 2,65 Gew.-% und somit ein Äquivalentgewicht von 1 585.

### Vorpolymerisat A2

2 004 g eines Hydroxypolyethers auf Basis von Trimethylolpropan, Propylenoxid und Ethylenoxid mit einem Molekulargewicht von 6000 sowie 126 g eines Hydroxylpropylethers auf Basis von Bisphenol A und Propylenoxid mit einem Molekulargewicht von 560 werden mit 1 900 g DESMODUR® W bei 100 bis 110°C umgesetzt, bis der berechnete NCO-Gehalt von 13,6 Gew.-% erreicht ist. Es werden 4 g Dibutylphosphat zugesetzt und das überschüssige 4,4'-Diisocyanatodicyclohexylmethan wird mittels Dünnschichtverdampfung bei 150 bis 180°C und einem Druck von 0,1 mbar entfernt. Das Vorpolymerisat hat eine Viskosität von 20 000 mPas bei 23°C, einen bestimmten NCO-Gehalt von 2,4 Gew.-% und somit ein Äquivalentgewicht von 1 750.

### Vorpolymerisat A3

578 g eines Hydroxylpolyesters auf Basis von Hexandiol-1,6, Neopentylglykol und Adipinsäure und mit einem Molekulargewicht von 1 700 g und 800 g eines Hydroxylpolyethers auf Basis von Trimethylolpropan, Propylenoxid und Ethylenoxid mit einem Molekulargewicht von 6 000 sowie 400 g eines Hydroxylpolyethers auf Basis von Propylenglykol und Propylenoxid mit einem Molekulargewicht von 1 000 und 9 g 1,4-Butandiol werden mit 2 725 g DESMODUR® W bei 100 bis 110°C umgesetzt, bis der berechnete NCO-Gehalt von 17,4 Gew.-% erreicht ist Das überschüssige 4,4'-Diisocyanatodicyclohexylmethan wird mittels Dünnschichtverdampfung bei 150 bis 180°C und einem Druck von 0,1 mbar entfernt. Das Vorpolymerisat wird mit Methoxypropylacetat auf 94,5 Gew.-% Festkörpergehalt verdünnt und hat eine Viskosität von 20 000 mPas bei 23°C, einen titrierten NCO-Gehalt von 3,5 Gew.-% und somit ein NCO-Äquivalentgewicht von 1200.

### Komponente B1

100 g 1,4-Bis-(2-hydroxyethoxy)benzol werden mit 100 g eines auf Propylenglykol und Propylenoxid basierenden Hydroxylpolyethers mit einem mittleren Molekulargewicht 2 000 in einem Dissolver zu einer Paste vermischt. Die so erhaltene Vernetzerpaste hat einen OH-Gehalt von 9,4 Gew.-% und somit ein Äquivalentgewicht von 180. Der Anteil der OH-Gruppen aus 1,4-Bis(2-hydroxyethoxy)benzol beträgt 91 mol-%.

### Komponente B2

100 g 1,4-Bis(2-hydroxyethoxy)benzol werden mit 100 g eines auf Trimethylolpropan, Propylenoxid und Ethylenoxid basierenden Polyethertriols mit einem mittleren Molekulargewicht von 6 000 in einem Dissolver zu einer Paste vermischt. Die so erhaltene Vernetzerpaste hat einen OH-Gehalt von 9,6 Gew.-% und somit ein Äquivalentgewicht von 189. Der Anteil der OH-Gruppen aus 1,4-Bis(2-hydroxyethoxy)benzol beträgt 95 mol-%.

### Herstellungsbeispiel 1

1585 g des Präpolymerisats A1 werden mit 180 g der Komponente B, 3,53 g Dibutylzinndilaurat und 3,53 g Isooctylmercaptoacetat sowie 50 g eines Verlaufmittels vermischt. Die Mischung hat eine Anfangsviskosität von etwa 10 000 mPas, gemessen bei 23°C, und eine Topfzeit von 8 Stunden. Nach dem Auftrag auf ein Trennpapier in einer Schichtdicke von ca. 100 µm wird die Mischung durch stufenweise Hitzebehandlung (3 Min. 80°C, 3 Min. 120°C und 3 Min. 160°C) ausgehärtet. Man erhält einen elastischen, homogenen Film mit hervorragenden mechanischen Eigenschaften:

| | |
|---|---|
| Modul (100 %) | 3,3 MPa |
| Zugfestigkeit | 7,3 MPa |
| Bruchdehnung | 400 % |
| Essigesterquellung | 258 % |

### Herstellungsbeispiel 2

1 750 g des Vorpolymerisats A2 werden mit 180 g der Komponente B und 9,36 g eines handelsüblichen Katalysators (FOMREZ® UL 29, Handelsprodukt der Fa. WITCO) sowie 54 g eines Verlaufmittels vermischt. Die Mischung hat eine Anfangsviskosität von etwa 12 000 mPas, gemessen bei 23°C, und hat eine Topfzeit von 5 bis 6 Stunden. Nach dem Auftrag auf ein Trennpapier in einer Schichtdicke von ca. 100 µm wird die Mischung, wie in Beispiel 1 beschrieben, ausgehärtet. Man erhält einen elastischen, homogenen Film mit hervorragenden mechanischen Eigenschaften, der aufgrund seines Erweichungspunktes unterhalb von 200°C auch verschweißbar ist

| | |
|---|---|
| Modul (100 %) | 2,6 MPa |
| Zugfestigkeit | 7,5 MPa |
| Bruchdehnung | 420 % |
| Essigesterquellung | 400 % |
| Wasserquellung | 13 % |

### Herstellungsbeispiel 3

1 200 g des Vorpolymerisats A3 werden mit 180 g der Komponente B1, 2,76 g Dibutylzinndilaurat, 2,76 g Isooctylmercaptoacetat und 39 g eines Verlaufmittels vermischt. Die Mischung hat eine Anfangsviskosität von etwa 15 000 mPas und eine Topfzeit von etwa 8 Stunden. Ein auf ein Trennpapier mit einer Schichtdicke von etwa 100 µm aufgebrachter Film wird, wie in Beispiel 1 beschrieben, ausgehärtet. Man erhält einen kompakten und elastischen Polyurethanfitm mit folgenden mechanischen Werten:

| | |
|---|---|
| Modul (100 %) | 4,2 MPa |
| Zugfestigkeit | 5,0 MPa |
| Bruchdehnung | 200 % |
| Essigesterquellung | 600 % |
| Wasserquellung | 6 % |

### Herstellungsbeispiel 4

1 750 g des Vorpolymerisats A2 werden mit 189 g der Komponente B2 und 3,88 g Dibutylzinndilaurat, 3,88 g Isooctylmercaptoacetat und 54 g eines Verlaufmittels vermischt. Die Mischung hat eine Anfangsviskosität von etwa 10 000 mPas und eine Topfzeit von etwa 8 h. Nach dem Auftrag auf ein Trennpapier in einer Schichtdicke von ca. 100 µm kann die Mischung wie in Beispiel 1 beschrieben ausgehärtet werden. Man erhält einen elastischen, weichen Film.

| | |
|---|---|
| Modul (100 %) | 2,6 MPa |
| Zugfestigkeit | 6,0 MPa |
| Bruchdehnung | 440 % |
| Essigesterquellung | 430 % |

### Anwendungsbeispiel:

Dieses Beispiel beschreibt die Herstellung einer Textilbeschichtung aus einem Baumwollsubstrat, einem Haft- und einem Deckstrich nach dem Umkehrverfahren. Die Haftstrichpaste besteht aus der in Herstellungsbeispiel 1 beschriebenen Mischung, und für die Deckstrichpaste wird die unter Herstellungsbeispiel 3 aufgeführte Rezeptur zusammen mit 10 Gew.-% einer handelsüblichen Pigmentanreibung, 0,2 Gew.-% Silikonöl und 2,5 Gew.-% eines Silikat-Füllstoffes verwendet.

Auf einer Beschichtungsmaschine mit 2 Streichwerken wird mittels eines Walzenrakels die obige Deckstrichpaste in einer Auftragsmenge von 80 g/m² auf ein Trennpapier aufgetragen und in einem Trockenkanal bei 160°C während 3 Minuten ausgehärtet. An dem zweiten Streichwerk wird in analoger Weise die obige Haftstrichpaste in einer Auftragsmenge von 60 g/m² auf den gehärteten Deckstrich gerakelt. Anschließend wird die Textilbahn, eine gerauhte Baumwollware, hinzukaschiert. Im 2. Trockenkanal wird daraufhin der Haftstrich bei 160°C während 3 bis 4 Minuten ausgehärtet.

Die Beschichtung hat eine Oberflächenhärte von Shore A 70 und weist eine gute Knickbeständigkeit und eine gute Lichtechtheit auf.

## Patentansprüche

1. Verwendung von reaktionsfähigen Massen mit einem Gehalt an inertem organischem Lösungsmittel von bis zu 20 Gew.-%, bezogen auf A, enthaltend
A. NCO-Präpolymer mit einem NCO-Gehalt von 1 bis 8 Gew.-% auf Basis von aliphatischen Polyisocyanat und mit einem Gehalt an monomerem Polyisocyanat unter 2 Gew.-%, jeweils bezogen auf A, und
B. Amin-freien Kettenverlängerer,
wobei das Äquivalentverhältnis der freien NCO-Gruppen aus A zu den NCO-reaktiven Gruppen von B 0,90 bis 1,35 beträgt,
**dadurch gekennzeichnet, dass** der Kettenverlängerer B zu mindestens 50 Äquivalent-%, bezogen auf die NCO-reaktiven Gruppen des Kettenverlängerers, aus Verbindungen der Formel
HO-X-Y-X-OH (I)
besteht, worin
Y Methylen, Ethylen, -C≡C-, Cyclohexylen-1,4, -1,3, -1,2, Phenylen-1,4, -1,3, -1,2 und
X Methylen, OCH₂CH₂ (wobei der Sauerstoff an das Y gebunden ist), Cyclohexylen-1,4, -1,3, -1,2
bedeuten mit der Maßgabe, dass die Verbindungen I zwischen 50 und 160°C schmelzen
zur Beschichtung von Leder oder Textilien.

2. Verwendung nach Anspruch 1, worin die Verbindung I 1,4-Bis-(2-hydroxyethoxy)benzol ist.

3. Verwendung nach Anspruch 1 mit einem Gehalt an monomerem Polyisocyanat unter 0,5 Gew.-%, bezogen auf A.

4. Verwendung nach Anspruch 1 mit einem Gehalt an inertem organischem Lösungsmittel bis zu 15 Gew.-%, bezogen auf A.

5. Verwendung nach Anspruch 1 mit einem NCO-Präpolymer eines NCO-Gehalts von 2 bis 4 Gew.-%.

6. Verwendung nach Anspruch 1 mit einem NCO-Präpolymer eines als Zahlenmittel bestimmten Molekulargewichts von 700 bis 8 000.

7. Verwendung nach Anspruch 1, wobei das NCO-Präpolymer A ein solches auf Basis von überwiegend 4,4'-Diisocyanato-dicyclohexylmethan ist

8. Verwendung nach Anspruch 1, wobei die Komponente A mit NCO-reaktiven Verbindungen (b) aufgebaut, bei denen es sich um 2 bis 3 Hydroxylgruppen aufweisende Polypropylenoxid- und/oder Polyethylenoxid-polyether mit einem mittleren Molekulargewicht von 500 bis 8 000 und/oder 2 bis 3 Hydroxylgruppen aufweisende Adipinsäurepolyester mit einem mittleren Molekulargewicht von 1 000 bis 6 000 handelt.

9. Verwendung nach Anspruch 1, wobei das Äquivalentverhältnis der freien NCO-Gruppen aus A zu den NCO-reaktiven Gruppen aus B 1 bis 1,25 beträgt.

## Claims

1. Use of reactive materials with a content of inert organic solvents of up to 20 wt.%, referred to A, containing
A. NCO prepolymer with a NCO content of 1 to 8 wt.% based on aliphatic polyisocyanate and a monomeric polyisocyanate content of below 2 wt.%, in each case referred to A, and
B. amine-free chain extender,
the equivalent ratio of the free NCO groups of A to the NCO-reactive groups of B being 0.90 to 1.35,
**characterised in that** the chain extender B comprises at least 50 equivalent percent, referred to the NCO-reactive groups of the chain extender, of compounds of the formula
HO-X-Y-X-OH (I)
wherein
Y denotes methylene, ethylene, -C≡C-, cyclohexylene-1,4, -1,3, -1,2, phenylene-1,4, -1,3, -1,2 and
X denotes methylene, OCH₂CH₂ (wherein the oxygen is bonded to Y), cyclohexylene-1,4, -1,3, -1,2
with the proviso that the compounds I melt between 50° and 160°C,
for coating leather or textiles.

2. Use according to claim 1, wherein the compound I is 1,4-bis(2-hydroxyethoxy)benzene.

3. Use according to claim 1 with a content of monomeric polyisocyanate of less than 0.5 wt.%, referred to A.

4. Use according to claim 1 with a content of inert organic solvents of up to 15 wt.%, referred to A.

5. Use according to claim 1 with an NCO prepolymer having an NCO content of 2 to 4 wt.%.

6. Use according to claim 1 with an NCO prepolymer having a number average molecular weight of 700 to 8000.

7. Use according to claim 1, wherein the NCO prepolymer A is a prepolymer largely based on 4,4'-diisocyanatodicyclohexylmethane.

8. Use according to claim 1, wherein the component A is built up from NCO-reactive compounds (b) that are polypropylene oxide polyethers and/or polyethylene oxide polyethers containing 2 to 3 hydroxyl groups and with a mean molecular weight of 500 to 8000 and/or adipic acid polyesters containing 2 to 3 hydroxyl groups and with a mean molecular weight of 1000 to 6000.

9. Use according to claim 1, the equivalent ratio of the free NCO groups of A to the NCO-reactive groups of B being 1 to 1.25.

## Revendications

1. Utilisation de compositions réactives avec une teneur en solvant organique inerte de jusqu'à 20% en poids sur base de A, contenant :
A. un prépolymère NCO avec une teneur en NCO allant de 1 à 8% en poids, à base d'un polyisocyanate aliphatique et avec une teneur en polyisocyanate monomère de moins de 2%, chaque fois sur base de A, et
B. un agent d'allongement de chaine exempt d'amine,
où le rapport des équivalents des radicaux NCO libres de A au radicaux réactifs avec les NCO de B se situe dans l'intervalle allant de 0,90 à 1,35,
**caractérisée en ce que** l'agent d'allongement de chaine B consiste pour au moins 50% en équivalents, sur base des radicaux réactifs avec les NCO de l'agent d'allongement de chaine, en des composés de la formule :
HO - X - Y - X - OH (I)
où
Y représente le radical méthylène, éthylene, -C≡C-, cyclohexylène-1,4, -1,3, -1,2, phénylène-1,4, -1,3, -1,2 et
X représente le radical méthylène, OCH₂CH₂ (où l'atome d'oxygène est relié sur le Y), cyclohexylène-1,4, -1,3, -1,2,
avec la condition que les composés I fondent entre 50 et 160°C,
pour le revêtement du cuir ou de textiles.

2. Utilisation suivant la revendication 1, où le composé I est le 1,4-bis(2-hydroxyéthoxy)benzène.

3. Utilisation suivant la revendication 1, avec une teneur en polyisocyanate monomère inférieure à 0,5% en poids, sur base de A.

4. Utilisation suivant la revendication 1, avec une teneur en solvant organique inerte de jusqu'à 15% en poids, sur base de A.

5. Utilisation suivant la revendication 1, avec un prépolymère NCO ayant une teneur en NCO de 2 à 4% en poids.

6. Utilisation suivant la revendication 1, avec un prépolymère NCO ayant un poids moléculaire déterminé sur la moyenne en nombre allant de 700 à 8000.

7. Utilisation suivant la revendication 1, où le prépolymère NCO A est celui à base essentiellement du 4,4'-diisocyanatodicyclohexylméthane.

8. Utilisation suivant la revendication 1, où le composant A est élaboré avec des composés réactifs avec les NCO (b), qui consistent en un poly(oxyde de propylène)- et/ou poly(oxyde d'éthylène)-polyéther présentant 2 à 3 radicaux hydroxyle, avec un poids moléculaire moyen allant de 500 à 8000 et/ou un polyester d'acide adipique présentant 2 à 3 radicaux hydroxyle, avec un poids moléculaire moyen allant de 1000 à 6000.

9. Utilisation suivant la revendication 1, où le rapport des équivalents des radicaux NCO libres de A aux radicaux réactifs avec les NCO de B se situe dans l'intervalle allant de 1 à 1,25.
